# EUROPEAN PATENT APPLICATION

(11) **EP 4 841 507 A1**
(43) Date of publication of application: **18.11.2026**
(21) Application number: 25176744.8
(22) Date of filing: 15.05.2025
(51) Int. Cl.: G06N 3/045, G06N 3/0475, G06N 3/082

(54) **METHOD AND SYSTEM FOR PROVIDING ROBUST MULTI-MODAL LANGUAGE MODEL OUTPUT**

(71) Applicant: Siemens Aktiengesellschaft, 80333 München (DE)
(72) Inventor: He, Bailan, 85757 Karlsfeld (DE); Liu, Yushan, 81737 München (DE)
(74) Representative: Siemens Patent Attorneys

(57) **Abstract**

The invention relates to providing robust multi-modal language model output, by receiving, by a user interface or a network interface, a question and an image that the question relates to, wherein the question is to be answered by the multi-modal language model, performing inference, by a Graph-of-Thought Reasoning Module building a graph, wherein nodes in the graph represent outputs of the multi-modal language model regarding the question and the image, with the steps of initially performing a generating operation, which prompts the multi-modal language model with the question and the image, receives an original output from the multi-modal language model, and creates an original node (ON) in the graph for storing the original output, selecting the original node (ON) as an active node, wherein the active node represents a currently available reasoning path, iteratively performing one, two, or more iterations of the generating operation to expand the graph with additional nodes (1, 2), wherein in each iteration the currently selected active nodes are expanded with links to one or more additional nodes (1, 2), wherein the additional nodes (1, 2) are created based on corresponding outputs from the multi-modal language model, and
the created additional nodes (1, 2) are taken as active nodes for the next iteration, wherein the active nodes represent currently available reasoning paths, and scoring the additional nodes (2) created in the final iteration, in particular by prompting the multi-modal language model or another model to evaluate their quality, and outputting, by the user interface or the network interface, the highest scoring additional node as output.

## Description

### Technical Field

The following relates to a method and system for providing robust multi-modal language model output.

### Background

Many industrial applications rely on multimodal data, wherein data modalities include both textual information and images, such as computer-aided designs (CADs) or piping and instrumentation diagrams (P&IDs). Common industrial tasks, such as predicting a machining strategy for a CAD model or validating the correctness of a P&ID, are addressed using machine learning (ML) techniques, particularly large language models (LLMs), which generate human-comprehensible outputs. These tasks often require the model to interpret both textual and visual data, as images provide essential contextual information for solving the problem. To address this, vision-language models (VLMs) have been developed, enabling the processing of both text and image inputs to generate solutions.

Vision-language models (VLMs) are highly vulnerable to adversarial attacks, particularly those involving manipulated images containing adversarial noise or hidden prompts. Such attacks can lead the model to generate incorrect or potentially harmful outputs, compromising the reliability and safety of the machine learning system in critical industrial applications.

Prior research on enhancing the adversarial robustness of vision-language models (VLMs) has explored various approaches, including reasoning-based defenses and consistency-checking mechanisms. Wei, Jason, et al., in their work titled "Chain-of-thought prompting elicits reasoning in large language models," published in Advances in Neural Information Processing Systems 35 (2022): 24824-24837, disclose Chain-of-Thought (CoT) prompting, which encourages models to generate intermediate reasoning steps, thereby improving their ability to handle complex tasks. The entire contents of that document are incorporated herein by reference.

Building upon this, Yao, Shunyu, et al., in their work titled "Tree of thoughts: Deliberate problem solving with large language models," published in Advances in Neural Information Processing Systems 36 (2023): 11809-11822, disclose the Tree-of-Thought (ToT) framework, which enables models to explore multiple reasoning paths for deliberate problem-solving. The entire contents of that document are incorporated herein by reference.

Further extending this concept, Besta, Maciej, et al., in their work titled "Graph of thoughts: Solving elaborate problems with large language models", published in the Proceedings of the AAAI Conference on Artificial Intelligence, Vol. 38, No. 16 (2024), disclose the Graph-of-Thought (GoT) framework, which represents reasoning processes as arbitrary graphs, thereby allowing for more intricate and interconnected reasoning structures. The entire contents of that document are incorporated herein by reference.

Despite these advancements, the adversarial robustness of vision-language models (VLMs) employing such reasoning mechanisms remains a critical concern. Wang, Zefeng, et al., in their work titled "Stop Reasoning! When Multimodal LLM with Chain-of-Thought Reasoning Meets Adversarial Image", published as arXiv preprint arXiv:2402.14899v3 [cs.CV] (2024), available on the internet at https://doi.org/10.48550/arXiv.2402.14899 on 12.05.2025, investigated the impact of Chain-of-Thought (CoT) reasoning on VLMs when subjected to adversarial image attacks. Their findings indicate that while CoT provides marginal improvements in robustness, it is not substantially effective against sophisticated attacks. Moreover, they introduced a novel "stop-reasoning attack" that effectively bypasses the CoT process, further challenging the model's defenses. The entire contents of that document are incorporated herein by reference.

Villani, Francesco, et al., in their work titled "Robust image classification with multi-modal large language models", published as arXiv preprint arXiv:2412.10353v2 [cs.CV] (2024), available on the internet at https://doi.org/10.48550/arXiv.2412.10353 on 12.05.2025, proposed Multi-Shield, a defense system leveraging multimodal capabilities to detect adversarial examples. By assessing the consistency between visual and textual representations, Multi-Shield abstains from uncertain classifications when discrepancies are detected, thereby enhancing the model's resilience against adversarial inputs. The entire contents of that document are incorporated herein by reference.

There is a need to improve the robustness and reliability of vision-language models (VLMs) in processing industrial use cases that involve both textual descriptions and images.

### Summary

An aspect of the invention is directed to identifying a problem in the prior art and providing a corresponding technical solution.

The invention is defined in the independent claims. Further advantageous arrangements and embodiments of the invention are set forth in the respective dependent claims.

The method for providing robust multi-modal language model output, wherein the multi-modal language model is in particular a vision-language model backbone, comprises the following operations performed by hardware modules and/or software modules executed by one or more processors:
- receiving, by a user interface or a network interface, a question and an image that the question relates to, wherein the question is to be answered by the multi-modal language model,
- performing inference, by a Graph-of-Thought Reasoning Module building a graph, wherein nodes in the graph represent outputs of the multi-modal language model regarding the question and the image, with the steps of
   - initially performing a generating operation, which
      - prompts the multi-modal language model with the question and the image,
      - receives an original output from the multi-modal language model, and
      - creates an original node in the graph for storing the original output,
   - selecting the original node as an active node, wherein the active node represents a currently available reasoning path,
   - iteratively performing one, two, or more iterations of the generating operation to expand the graph with additional nodes, wherein in each iteration
      - the currently selected active nodes are expanded with links to one or more additional nodes, wherein the additional nodes are created based on corresponding outputs from the multi-modal language model, and
      - the created additional nodes are taken as active nodes for the next iteration, wherein the active nodes represent currently available reasoning paths, and
   - scoring the additional nodes created in the final iteration, in particular by prompting the multi-modal language model or another model to evaluate their quality, and
- outputting, by the user interface or the network interface, the highest scoring additional node as output.

The system for providing robust multi-modal language model output, wherein the multi-modal language model is in particular a vision-language model backbone, comprises the following hardware modules and/or software modules executed by one or more processors:
- a user interface or a network interface, configured for receiving a question and an image that the question relates to, wherein the question is to be answered by the multi-modal language model,
- a Graph-of-Thought Reasoning Module, configured for performing inference by building a graph, wherein nodes in the graph represent outputs of the multi-modal language model regarding the question and the image, with the steps of
   - initially performing a generating operation, which
      - prompts the multi-modal language model with the question and the image,
      - receives an original output from the multi-modal language model, and
      - creates an original node in the graph for storing the original output,
   - selecting the original node as an active node, wherein the active node represents a currently available reasoning path,
   - iteratively performing one, two, or more iterations of the generating operation to expand the graph with additional nodes, wherein in each iteration
      - the currently selected active nodes are expanded with links to one or more additional nodes, wherein the additional nodes are created based on corresponding outputs from the multi-modal language model, and
      - the created additional nodes are taken as active nodes for the next iteration, wherein the active nodes represent currently available reasoning paths, and
   - scoring the additional nodes created in the final iteration, in particular by prompting the multi-modal language model or another model to evaluate their quality, and
- wherein the user interface or the network interface is configured for outputting the highest scoring additional node as output.

The following advantages and explanations are not necessarily the result of the object of the independent claims. Rather, they may be advantages and explanations that only apply to certain embodiments or variants.

The term "computer" is to be interpreted broadly to encompass any electronic device with data processing capabilities. Examples include, but are not limited to, personal computers, servers, clients, programmable logic controllers (PLCs), handheld devices, pocket PCs, mobile devices such as smartphones, or other communication devices capable of processing data. A computer may include one or more processors and memory units, such as volatile memory (e.g., RAM) or non-volatile memory (e.g., solid-state drives, hard disks, flash memory).

In the context of embodiments of the invention, the terms "memory," "memory unit", or "memory module" refer to any suitable storage medium. Examples include volatile memory (e.g., random-access memory (RAM)) or non-volatile memory (e.g., solid-state drives, hard disks, flash memory cards, or optical disks).

In embodiments, the method and system, or at least some of their embodiments, provide an innovative application of Graph-of-Thought (GoT) reasoning to Visual Question Answering (VQA) tasks, marking the first instance of such integration. Unlike existing methods that focus solely on enhancing reasoning processes or detecting adversarial inconsistencies, at least some of the embodiments explicitly integrate GoT reasoning as a structured framework to both enhance inference quality and improve adversarial robustness.

In embodiments, the method and system, or at least some of their embodiments, strengthen VQA models against adversarial attacks by systematically evaluating the relationship between reasoning structure complexity and adversarial resistance. Rather than merely detecting adversarial perturbations at the input or output levels, at least some of the embodiments analyze how different stages of structured reasoning contribute to robustness, thereby enabling a more resilient decision-making process.

In embodiments, the method and system, or at least some of their embodiments, enhance VQA resilience against adversarial perturbations by utilizing GoT-based structured reasoning as a robust defense mechanism.

### Description of Embodiments

In an embodiment of the method and system, in each iteration, a merging operation consolidates two active nodes into one if the count of active nodes exceeds two.

This embodiment reinforces stability by combining similar or complementary reasoning paths. It can consolidate redundant or complementary inference trajectories, thereby reinforcing decision consistency.

In an embodiment of the method and system, in each iteration, a splitting operation introduces a new inference branch, in particular by informing the multi-modal language model that the image may have been modified.

This embodiment diversifies reasoning to improve robustness against adversarial perturbations. By introducing alternative interpretations, the embodiment makes it more difficult for adversarial noise to mislead the Graph-of-Thought Reasoning Module.

In an embodiment of the method and system, in each iteration, a pruning operation prompts the multi-modal language model to score the active nodes and eliminates at least one active node, in particular by retaining only the top three, top four, top five, top six, or top seven highest-scoring active nodes.

This embodiment prevents unnecessary computational overhead by eliminating less relevant nodes, ensuring that only the most promising reasoning paths persist. This embodiment maintains a manageable reasoning space while preserving inference quality and efficiency.

The computer program product comprises instructions which, when the program is executed by a computer, cause the computer to carry out a method according to one of the method claims.

The provisioning device is configured to store and/or provide the computer program product, wherein the provisioning device:
(a) is a computer-readable storage medium, in particular a flash drive, SD card, or other tangible storage medium, that stores the computer program product; or
(b) enables access to the computer program product via a network interface, in particular as a server, cloud-based storage system, or other remote computing infrastructure.

### Brief Description

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: illustrates a first embodiment;
- Fig. 2: illustrates another embodiment;
- Fig. 3: illustrates another embodiment;
- Fig. 4: illustrates another embodiment;
- Fig. 5: illustrates another embodiment;
- Fig. 6: illustrates a flowchart of a possible exemplary embodiment.

### Detailed Description

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The modules described herein may include hardware modules, software modules, or a combination thereof. A software module may consist of a software library, procedure, subroutine, function, or, depending on the programming paradigm, any other portion of software code suitable for implementing the functionality of the module. In certain embodiments, specific functionalities may be implemented exclusively by hardware (e.g., a processor such as an ASIC or FPGA), while other functionalities may be implemented by software.

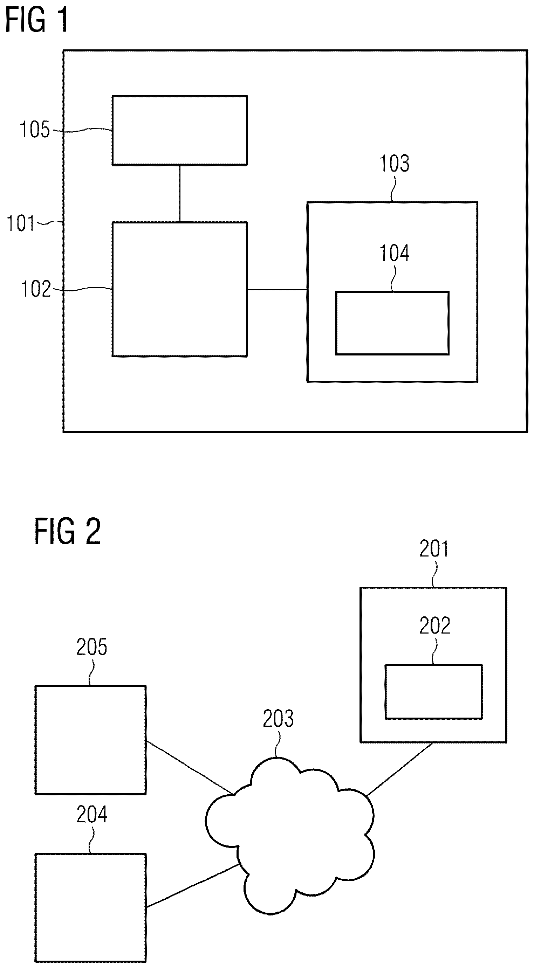

Fig. 1 illustrates an exemplary architecture for computer-implementation of embodiments of the invention, comprising:
(101) A computer system;
(102) A processor for executing instructions;
(103) A memory for storing data and program instructions;
(104) A computer program (product) containing instructions for carrying out embodiments of the invention; and
(105) A user interface for presenting results of embodiments of the invention or receiving user input.

In an embodiment of the invention, the computer program 104 includes program instructions for implementing embodiments of the method. The computer program 104 is stored in the memory 103 of the computer system 101. In embodiments, the computer system 101 may execute the program instructions of the computer program 104 using the processor 102. Results produced by the execution of the program instructions may be presented on the user interface 105, stored in the memory 103, or saved to another suitable storage medium, such as external storage devices or cloud-based systems.

Fig. 2 illustrates another sample structure for computer-implementation of embodiments of the invention, comprising:
(201) A provisioning device;
(202) A computer program (product);
(203) A computer network;
(204) A computing system;
(205) A mobile device.

In an embodiment, the provisioning device 201 stores a computer program 202 that includes program instructions for carrying out embodiments of the invention. The provisioning device 201 provides the computer program 202 via a computer network 203, such as the Internet. For example, a computing system 204 or a mobile device 205, such as a smartphone, may load the computer program 202 and execute its program instructions to implement embodiments of the invention.

The provisioning device 201 may serve as a network interface, such as a server, cloud-based storage system, or other remote computing infrastructure, enabling the computer program 202 to be downloaded or accessed by the computing system 204 or mobile device 205 via the computer network 203.

Alternatively, the provisioning device 201 may act as a computer-readable storage medium. For example, the provisioning device 201 may be a physical storage medium, such as an SD card, USB drive, external hard disk, or optical disk, that stores the computer program 202. The provisioning device 201 may be physically connected to the computing system 204 or mobile device 205, such as via a USB interface or SD card slot, enabling these devices to load and execute the computer program 202.

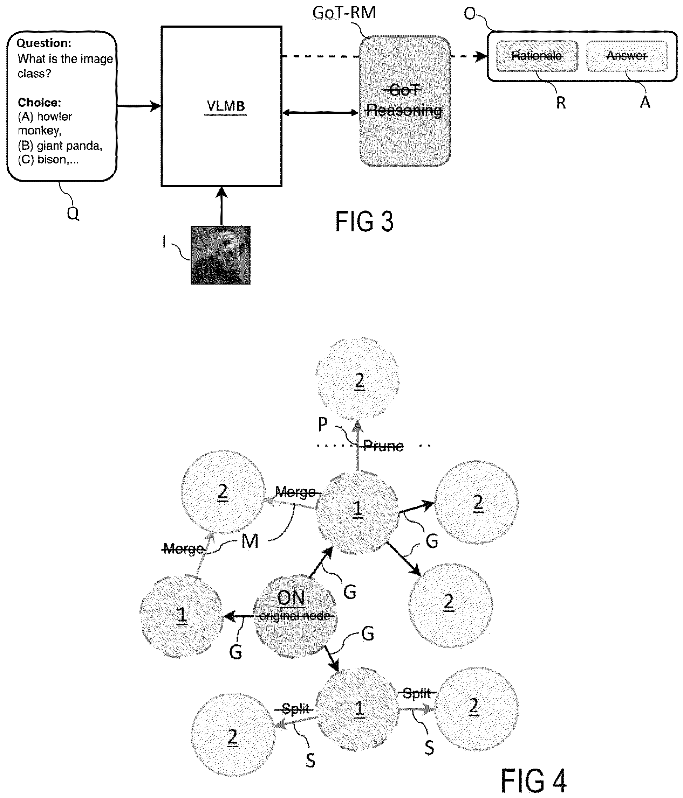

The embodiments shown in Figs. 3 to 6 can be implemented with a structure as shown in Fig. 1 or Fig. 2.

According to embodiments, a defense mechanism is proposed that leverages Graph-of-Thought (GoT) reasoning. In certain embodiments, the approach structures the reasoning and inference process as an adaptive graph, which may enhance the robustness of VLMs against adversarial attacks and provide more reliable and secure outputs, even in the presence of potentially malicious input data.

Fig. 3 illustrates an embodiment, showing a reasoning-enhanced vision-language model with improved robustness against adversarial attacks. Fig. 3 shows two key modules:
- Vision-Language Model Backbone VLMB
- Graph-of-Thought Reasoning Module GoT-RM

In the following, the term "Vision-Language Model Backbone" refers to a foundational model (e.g., LLaVA or LLaMA3-Vision) used for multimodal reasoning. In comparison, the terms "vision-language model"/"VLM" may refer to a complete system, including the backbone and any additional modules, for example the Graph-of-Thought Reasoning Module GoT-RM acting as an orchestration logic as shown in Fig. 3. The embodiment shown in Fig. 3 builds on the Vision-Language Model Backbone VLMB and extends that base model. The Vision-Language Model Backbone VLMB serves as the core processing unit and may perform cross-modal feature fusion by integrating both visual and textual information. It may construct a unified representation of multimodal inputs to ensure seamless information processing.

As shown in Fig. 3, a question Q and an image I are processed by the Vision-Language Model Backbone VLMB working under the governance of the Graph-of-Thought Reasoning Module GoT-RM to generate an output O, which might include a rationale R and an answer A, for example.

### Graph-of-Thought Reasoning Module GoT-RM

Fig. 4 illustrates operation of the Graph-of-Thought Reasoning Module GoT-RM
shown in Fig. 3, which structures inference as an adaptive and iterative process to strengthen the reasoning of the vision-language model while enhancing its robustness against adversarial perturbations.

The Graph-of-Thought Reasoning Module GoT-RM works with a graph that is stored in a structured data format, outside of the Vision-Language Model Backbone VLMB, under the governance of the Graph-of-Thought Reasoning Module GoT-RM. Any structured data format or database can be used to store the graph. The Graph-of-Thought Reasoning Module GoT-RM uses the Vision-Language Model Backbone VLMB as its reasoning engine, prompting it to generate or evaluate content. Managing the graph itself falls into the responsibility of the Graph-of-Thought Reasoning Module GoT-RM. For example, each node in the graph can be represented as a Python dictionary with fields such as:

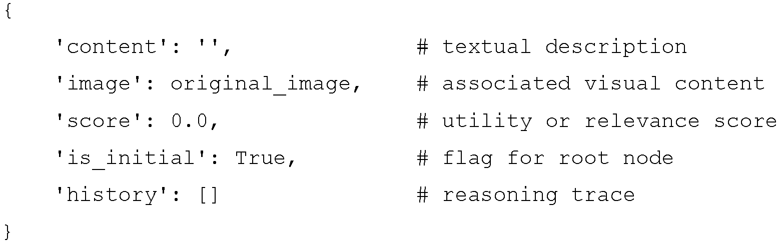

The Python dictionary can manage the prompting of the Vision-Language Model Backbone VLMB, update the graph based on outputs, and coordinate the reasoning process.

With regard to using a graph to structure and guide reasoning, this approach is inspired by the paper "Graph of thoughts: Solving elaborate problems with large language models" as cited and incorporated by reference above. However, the embodiments described in the following do not use the same architecture and operations as described in that paper but depart from it both at the conceptual level as well as at the implementation level.

The embodiments described in the following provide a novel and unique set of graph operations (Generation, Merge, Split, Prune) and a custom orchestration logic for prompting and reasoning with the Vision-Language Model Backbone VLMB, see for example the algorithm below.

The reasoning process executed by the Graph-of-Thought Reasoning Module GoT-RM follows a structured pipeline where nodes in the graph represent outputs of the Vision-Language Model Backbone VLMB, and operations such as a generating operation G, a merging operation M, a splitting operation S, and/or a pruning operation P dynamically refine the inference. For a minimal but functional implementation, the generating operation G is the only strictly necessary operation, as it enables the creation and expansion of the graph. However, to enhance effectiveness and robustness, each of the other operations is beneficial.

The process begins with an original node ON, representing an initial output of the Vision-Language Model Backbone VLMB, when prompted with the image I and question Q shown in Fig. 3, prior to reasoning. As reasoning progresses step by step, first nodes 1 and then second nodes 2 are generated by generating operations G to explore alternative inference paths, thereby refining the model's decision-making. Active nodes refer to the set of currently available reasoning paths at any given step, evolving dynamically as the process unfolds.

If the number of active nodes exceeds two, a merge operation M can consolidate two nodes into one, reinforcing stability by combining similar or complementary reasoning paths. Additionally, if the step count is greater than zero and active nodes are present, a splitting operation S introduces a new inference branch, diversifying reasoning to improve robustness against adversarial perturbations. To maintain efficiency, a pruning operation P eliminates weaker nodes, retaining only the top five (or top three, top four, top six, top seven) highest-scoring inference paths.

An example of the algorithm implemented by the Graph-of-Thought Reasoning Module GoT-RM can be summarized as follows:

```
 Initialize active_nodes with one original node
  
 FOR step FROM 0 to N:
     GENERATE new nodes from each active node
     IF active_nodes count > 2 THEN:
          MERGE two nodes into one
     IF step > 0 AND active_nodes exist THEN:
          SPLIT one node into two
     PRUNE nodes, keeping the top 5
 END FOR
```

**This algorithm supports a dynamic and adaptive reasoning framework, enhancing the model's ability to generate robust, interpretable, and resilient decisions.**

**The Graph-of-Thought Reasoning Module GoT-RM builds a new graph for each input during deployment. Each node in the graph represents a possible output and is associated with a score. At the end of the reasoning process, the Graph-of-Thought Reasoning Module GoT-RM selects the node with the highest score as the final output. In this way, the Graph-of-Thought Reasoning Module GoT-RM produces a single final answer, although intermediate nodes can be accessed if needed.**

### Generating operation G

**At each reasoning step, the Graph-of-Thought Reasoning Module GoT-RM expands the graph by introducing new nodes that explore alternative logical inferences. Each new node represents a refined state of reasoning, incorporating additional context or corrections to adversarially manipulated inputs.**

**The following prompt to the Vision-Language Model Backbone VLMB can be used for the generating operation G:**
"""Give the following image: <Img>ImageContent</Img>. You will be able to see the image once I provide it to you. Please answer my questions. ###Human: <Img><ImageHere></Img> Question: What type of city district is this? Choices: (A) government, (B) warehouse, (C) commercial, (D) residential. First, generate a rationale with at least three sentences that can be used to infer the answer to the question. At last, infer the answer according to the question, the image, and the generated rationale. The answer should be in the form 'The answer is ()'. We know the Answer Hints: {content}."""

### Merging operation M

**If the number of active nodes exceeds a predefined threshold, the merging operation M combines two reasoning paths into a single node. This operation enhances stability by consolidating redundant or complementary inference trajectories, thereby reinforcing decision consistency.**

**The following prompt to the Vision-Language Model Backbone VLMB can be used for the merging operation G:**
"""Given the task \n [original_prompt] \n, here are two candidate responses: candidate 1: {nodes_content([0]}, candidate 2: {nodes_content[1]}. Please select one of the two responses, and conclude with exactly "The best candidate is number [X], because [Y]", where [X] is number 1 or 2, and [Y] is a brief reason."""

### Splitting operation S

**The splitting operation S enables the model to diversify its reasoning process by creating multiple candidate inference paths. It enhances robustness by introducing alternative interpretations, making it more difficult for adversarial noise to mislead the reasoning module.**

**The following prompt to the Vision-Language Model Backbone VLMB can be used for the splitting operation S:**
"""Given the task \n [original_prompt] \n, here is a candidate response: \n{split_node_original_text}\n\n however the image might have been modified. Please provide a new response considering the image has been modified. """

### Pruning operation P

**To prevent unnecessary computational overhead, the pruning operation P eliminates less relevant nodes, ensuring that only the most promising reasoning paths persist. This operation maintains a manageable reasoning space while preserving inference quality and efficiency.**

The following prompt to the Vision-Language Model Backbone VLMB can be used for the pruning operation P:
"""Evaluate the candidate response to the given task based on logical coherence, factual accuracy, relevance, and clarity. Provide one overall score (0-9) and conclude exactly: "The overall score is [X], because [Y]" where [X] is 0-9 and [Y] is concise reasons."""

After calculation of the scores, only the top five highest-scoring nodes can be retained, for example.

The reasoning depth can be, for example, two steps or three steps. Experiments have shown that three steps yield slightly better results (stronger adversarial resistance and better robustness) than two steps. Of course, also higher numbers are possible.

The above-described adaptive and iterative reasoning strategy ensures that the Graph-of-Thought Reasoning Module GoT-RM dynamically refines its inference process while counteracting adversarial perturbations. By integrating structured reasoning operations, the system can resist adversarial attacks, maintain robust interpretability, and generate more reliable predictions.

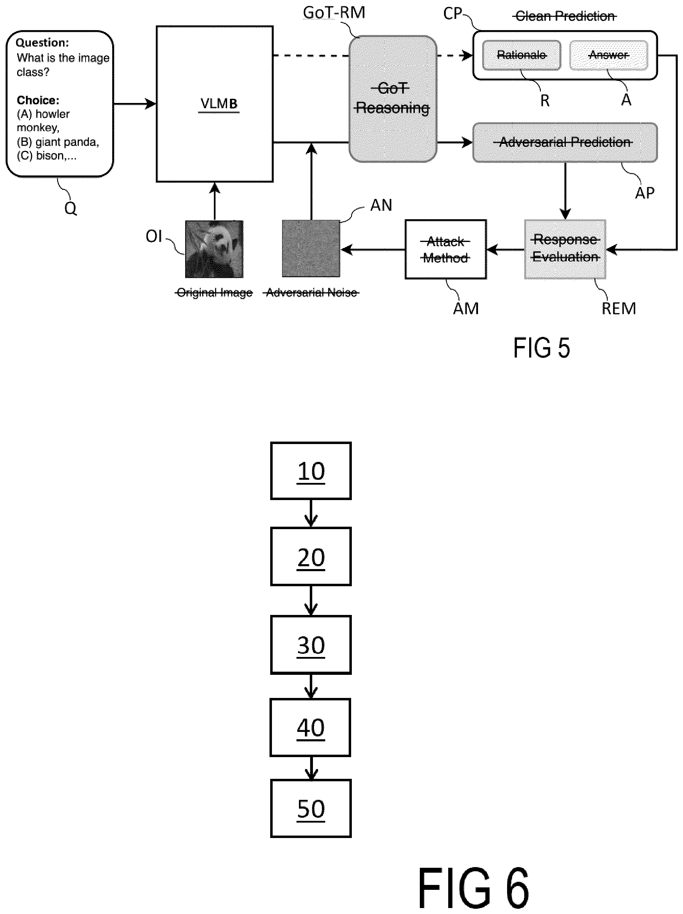

Fig. 5 illustrates an embodiment, showing an overall framework and technical features of a reasoning-enhanced adversarial defense system. This framework is directed to improving the robustness of vision-language models (VLMs) against adversarial attacks. Fig. 5 shows four key modules:
- Vision-Language Model Backbone VLMB
- Graph-of-Thought Reasoning Module GoT-RM
- Adversarial Input & Attack Module AM
- Response Evaluation Module REM

The Vision-Language Model Backbone VLMB and the Graph-of-Thought Reasoning Module GoT-RM act as described above regarding Figs. 3 and 4.

The embodiment shown in Fig. 5 implements an iterative process to evaluate the robustness of the embodiment shown in Fig. 3 against adversarial attacks. Initially, an original image OI is processed by the Vision-Language Model Backbone VLMB to generate a clean prediction CP, which can include a rationale R and an answer A to a question Q and serves as a reference. In subsequent steps, adversarial noise AN is added to the original image OI to generate an adversarial input, which is designed to mislead the vision-language model into making an adversarial prediction AP, which is an incorrect prediction. During both clean and adversarial prediction processes, the current embodiment employs the Graph-of-Thought Reasoning Module GoT-RM to enhance interpretability and decision-making. The Response Evaluation Module REM then compares the clean prediction CP and adversarial prediction AP, in particular assessing the model's vulnerability and reasoning quality. Based on the evaluation results, the adversarial input is updated iteratively, refining the attack strategy to further challenge the model in subsequent iterations.

### Adversarial Input & Attack Module AM:

According to certain embodiments, this module may introduce adversarially perturbed images along with corresponding textual questions. In these embodiments, the adversarial noise AN may be strategically designed and iteratively updated by the Adversarial Input & Attack Module AM to manipulate the model's decision-making process, thereby posing challenges to its robustness.

The operation of the Adversarial Input & Attack Module AM is fully automatic. Given an input sample (image + question), the Adversarial Input & Attack Module AM autonomously generates adversarial variants and evaluates their impact on the output of the Vision-Language Model Backbone VLMB.

### Response Evaluation Module REM

The Response Evaluation Module REM primarily assesses the effectiveness of adversarial attacks and the robustness of the vision-language model using a straightforward accuracy metric. The Response Evaluation Module REM follows a two-step evaluation process:
1. Accuracy-Based Attack Assessment
   a. The first evaluation step determines whether the model was successfully misled by the adversarial input.
   b. If the model's answer to the adversarially perturbed input differs from the clean prediction, the attack is considered successful; otherwise, the attack failed (i.e., the model was robust against attack).
   c. This simple accuracy metric serves as the baseline indicator of the model's vulnerability.
   The Accuracy-Based Attack Assessment can be implemented as being fully automatically executed by the Response Evaluation Module REM, requiring no human intervention. For example, in a multiple-choice question answering task, the Response Evaluation Module REM can automatically verify whether the model's final output matches the correct option.
2. Answer Evolution Analysis
   a. Beyond basic accuracy assessment, the Response Evaluation Module REM analyzes how the model's responses evolve across multiple attack iterations.
   b. Changes in rationale, confidence levels, and final predictions are examined to gain insights into how adversarial perturbations influence the VLM's reasoning process.
   c. This iterative evaluation helps refine both the attack strategy and the robustness of the model.

The second step of Answer Evolution Analysis may be partially automated. In some embodiments, it may require human input - especially when analyzing intermediate outputs to refine prompts or assess reasoning quality. For instance, evaluating whether nodes newly generated by the generating operation G are meaningfully distinct, or the merge operation M has merged nodes appropriately, often depends on task-specific context and human insight. According to an embodiment, the Response Evaluation Module REM will output corresponding information to a user and receive input from the user to perform the second step of Answer Evolution Analysis. Alternatively, the Answer Evolution Analysis can be fully automated by replacing the human input with queries to one or more machine learning models that have been trained for the respective tasks.

By employing this evaluation framework, the Response Evaluation Module REM measures the model's resilience against adversarial attacks and can identify areas for improvement in its reasoning and decision-making processes.

In a variant of the embodiment shown in Fig. 3, at least a subset of the functionality of the Response Evaluation Module REM as described above, in particular the Answer Evolution Analysis, can be introduced in order to improve the prompts used by the Graph-of-Thought Reasoning Module GoT-RM, thereby also improving its reasoning and decision-making processes. In this regard, the Response Evaluation Module REM allows technical users to inspect different outputs generated via GoT reasoning and adjust prompts used by the Graph-of-Thought Reasoning Module GoT-RM if needed. Prompts can be predefined or modified during deployment.

The described embodiments are not directed to fine-tuning or modifying the Vision-Language Model Backbone VLMB itself.

Fig. 6 shows a flowchart of a possible exemplary embodiment for providing robust multi-modal language model output, wherein the multi-modal language model is in particular a vision-language model backbone, comprising the following operations performed by hardware modules and/or software modules executed by one or more processors:
In a receiving operation 10, a user interface or a network interface receives a question and an image that the question relates to, wherein the question is to be answered by the multi-modal language model.

A Graph-of-Thought Reasoning Module performs inference by building a graph, wherein nodes in the graph represent outputs of the multi-modal language model regarding the question and the image, with the steps of:
In an initialization operation 20, performing a generating operation, which prompts the multi-modal language model with the question and the image, receives an original output from the multi-modal language model, and creates an original node in the graph for storing the original output.

In a selecting operation 30, selecting the original node as an active node, wherein the active node represents a currently available reasoning path.

In a set of iterations 40, performing one, two, or more iterations of the generating operation to expand the graph with additional nodes, wherein in each iteration
- the currently selected active nodes are expanded with links to one or more additional nodes, wherein the additional nodes are created based on corresponding outputs from the multi-modal language model, and
- the created additional nodes are taken as active nodes for the next iteration, wherein the active nodes represent currently available reasoning paths.

The additional nodes created in the final iteration are scored, in particular by prompting the multi-modal language model or another model to evaluate their quality.

In an outputting operation 50, the user interface or the network interface output the highest scoring additional node as output.

Embodiments of the method may be executed by one or more processors, which may include a microcontroller, microprocessor, Application Specific Integrated Circuit (ASIC), or neuromorphic microchip (e.g., a neuromorphic processor unit). These processors may be part of a computing device such as a smartphone, tablet, laptop, server, or a control system in a cloud-based environment.

The above-described embodiments of the method may be implemented via a computer program product including one or more computer-readable storage media having stored thereon instructions executable by one or more processors of a computing system. Execution of the instructions causes the computing system to perform acts corresponding to the operations of embodiments of the method described above.

The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "A, B, and/or C" as an alternative expression may provide that one or more of A, B, and C may be used.

For clarity, it should be understood that the use of "a" or "an" in this application includes the possibility of a plurality, and the term "comprising" does not exclude additional steps or elements.

Independent of the grammatical term usage, individuals with male, female, or other gender identities are included within the term.

## Claims

1. A computer implemented method for providing robust multi-modal language model (VLMB) output, wherein the multi-modal language model (VLMB) is in particular a vision-language model backbone, comprising the following operations performed by hardware modules and/or software modules executed by one or more processors:
- receiving (10), by a user interface or a network interface, a question (Q) and an image (I) that the question (Q) relates to, wherein the question is to be answered by the multi-modal language model (VLMB),
- performing inference, by a Graph-of-Thought Reasoning Module (GoT-RM) building a graph, wherein nodes in the graph represent outputs of the multi-modal language model (VLMB) regarding the question (Q) and the image (I), with the steps of
- initially performing (20) a generating operation (G), which
- prompts the multi-modal language model (VLMB) with the question (Q) and the image (I),
- receives an original output from the multi-modal language model (VLMB), and
- creates an original node (ON) in the graph for storing the original output,
- selecting (30) the original node (ON) as an active node, wherein the active node represents a currently available reasoning path,
- iteratively performing (40) one, two, or more iterations of the generating operation (G) to expand the graph with additional nodes (1, 2), wherein in each iteration
- the currently selected active nodes are expanded with links to one or more additional nodes (1, 2), wherein the additional nodes (1, 2) are created based on corresponding outputs from the multi-modal language model (VLMB), and
- the created additional nodes (1, 2) are taken as active nodes for the next iteration, wherein the active nodes represent currently available reasoning paths, and
- scoring the additional nodes (2) created in the final iteration, in particular by prompting the multi-modal language model (VLMB) or another model to evaluate their quality, and
- outputting (50), by the user interface or the network interface, the highest scoring additional node (2) as output (O).

2. The method of claim 1,
- wherein in each iteration, a merging operation (M) consolidates two active nodes into one if the count of active nodes exceeds two.

3. The method according to any of the preceding claims,
- wherein in each iteration, a splitting operation (S) introduces a new inference branch, in particular by informing the multi-modal language model (VLMB) that the image (I) may have been modified.

4. The method according to any of the preceding claims,
- wherein in each iteration, a pruning operation (P) prompts the multi-modal language model (VLMB) to score the active nodes and eliminates at least one active node, in particular by retaining only the top three, top four, top five, top six, or top seven highest-scoring active nodes.

5. A system for providing robust multi-modal language model (VLMB) output, wherein the multi-modal language model (VLMB) is in particular a vision-language model backbone, comprising
- a user interface or a network interface, configured for receiving (10) a question (Q) and an image (I) that the question (Q) relates to, wherein the question is to be answered by the multi-modal language model (VLMB),
- a Graph-of-Thought Reasoning Module (GoT-RM), configured for performing inference by building a graph, wherein nodes in the graph represent outputs of the multi-modal language model (VLMB) regarding the question (Q) and the image (I), with the steps of
- initially performing (20) a generating operation (G), which
- prompts the multi-modal language model (VLMB) with the question (Q) and the image (I),
- receives an original output from the multi-modal language model (VLMB), and
- creates an original node (ON) in the graph for storing the original output,
- selecting (30) the original node (ON) as an active node, wherein the active node represents a currently available reasoning path,
- iteratively performing (40) one, two, or more iterations of the generating operation (G) to expand the graph with additional nodes (1, 2), wherein in each iteration
- the currently selected active nodes are expanded with links to one or more additional nodes (1, 2), wherein the additional nodes (1, 2) are created based on corresponding outputs from the multi-modal language model (VLMB), and
- the created additional nodes (1, 2) are taken as active nodes for the next iteration, wherein the active nodes represent currently available reasoning paths, and
- scoring the additional nodes (2) created in the final iteration, in particular by prompting the multi-modal language model (VLMB) or another model to evaluate their quality, and
- wherein the user interface or the network interface is configured for outputting (50) the highest scoring additional node (2) as output (O).

6. A computer program product comprising instructions which, when the program is executed by a computer, cause the computer to carry out a method according to one of the method claims.

7. A provisioning device configured to store and/or provide the computer program product according to the preceding claim, wherein the provisioning device:
(a) is a computer-readable storage medium, in particular a flash drive, SD card, or other tangible storage medium, that stores the computer program product; or
(b) enables access to the computer program product via a network interface, in particular as a server, cloud-based storage system, or other remote computing infrastructure.
